# EUROPÄISCHE PATENTSCHRIFT

(11) **EP 1 586 781 B1**
(45) Veröffentlichungstag und Bekanntmachung des Hinweises auf die Patenterteilung: **10.04.2013**
(21) Anmeldenummer: 05007996.1
(22) Anmeldetag: 12.04.2005
(51) Int. Cl.: A47B 47/04, F16B 12/04

(54) **Regalsystem**
Shelf system
Système d'étagères

(30) Priorität: 13.04.2004 DE 102004017877
(43) Veröffentlichungstag der Anmeldung: 19.10.2005
(73) Patentinhaber: Bulthaup GmbH & Co. KG, 84155 Bodenkirchen (DE)
(72) Erfinder: Neumann, Rene, 84149 Eberspoint (DE); Rieder, Manfred, 84160 Frontenhausen (DE); Oberwallner, Tobias, 84428 Buchbach (DE)
(74) Vertreter: Klunker . Schmitt-Nilson . Hirsch

(56) Entgegenhaltungen:
- WO-A-79/00184
- DE-A1- 2 101 833
- GB-A- 1 203 305
- US-A- 3 190 243

## Beschreibung

Die vorliegende Erfindung betrifft ein Regalsystem. Regalsysteme sind in zahlreichen unterschiedlichen Ausführungsformen bekannt und unterscheiden sich unter anderem in der Fixierung der Borde, d. h. der Regalböden. Es sind Lösungen bekannt, bei denen die Regalböden an vertikal stehenden Wangen des Regals oder an einem Traggerüst befestigt sind. Bekannt sind beispielsweise Regalsysteme, bei denen die Borde mittels Tragarmen an einem im Bereich der Rückwand vorgesehenen Traggerüst befestigt sind. Vorbekannte Lösungen erfordern üblicherweise große Materialstärken der Borde bzw. der vertikalen Wangen zur Aufnahme von Befestigungselementen oder weisen den Nachteil auf, dass meist aufwendige Halteelemente zur Stützung der Borde erforderlich sind, die zudem sichtbar sind und damit den optischen Gesamteindruck stören.

US 3,190,243 A beschreibt ein Regalsystem, in welchem an einer Rückwand Borde befestigt werden können. Dazu weisen die Rückwand und die Borde Befestigungselemente, beispielsweise in Form einer Metallschiene bzw. Metallplatte mit Löchern auf. Mittels Bolzen, welche jeweils in die Befestigungselemente der Rückwand und der Borde eingreifen, werden die Borde an der Wand befestigt, wobei die Bolzen durch eine von der Unterseite der Borde zugängliche Ausnehmung festgezogen werden.

In DE 21 01 833 A1 wird ein Verfahren zur Herstellung einer Stoß-, Winkel-, Gehrungs-, oder Eckenverbindung zwischen Holzplatten beispielsweise für Kastenmöbel beschrieben. Dabei wird in einen durch Nuten der aneinandergrenzenden Platten gebildeten Hohlraum nach Zusammenspannen der Platten ein Zwischenelement aus Hartschaumstoff eingeschäumt.

GB 1 203 305 beschreibt ein Verfahren zur Verbindung zweier Holzplatten, wobei zunächst Ausnehmungen in den zu verbindenden Platten erzeugt werden, welche miteinander in Verbindung stehen. In diese zusammenhängenden Ausnehmungen der benachbarten Platten wird dann eine Vergussmasse eingespritzt, welche im ausgehärteten Zustand eine Verbindung der Platten bildet.

Es ist die Aufgabe der vorliegenden Erfindung ein Regalsystem dahingehend weiterzubilden, dass auch Materialien geringer Dicke verwendet werden können und sich ein ansprechender optischer Gesamteindruck erzielen lässt.

Diese Aufgabe wird durch ein Regalsystem mit den Merkmalen gemäß Anspruch 1 gelöst. Danach ist vorgesehen, dass das Bord in die Rückwand eingesteckt oder an die Rückwand angesetzt ist, wobei das Bord sowie die Rückwand jeweils wenigstens eine Ausnehmung aufweisen, die zueinander benachbart sind, und wobei sich in der Ausnehmung der Rückwand sowie in der benachbarten Ausnehmung des Bordes eine Vergussmasse befindet. Die Vergussmasse nimmt im Inneren des Bordes bzw. der Rückwand die Kräfte auf und überträgt diese gleichmäßig an das jeweils andere Bauteil. Insgesamt ergibt sich ein großer tragender Materialquerschnitt an der Verbindungsfläche von Rückwand bzw. Paneelwand und Bord und damit eine hohe erreichbare Kraftübertragung.

Die erfindungsgemäße Lösung ermöglicht das Verbinden zweier Plattenmaterialien auch geringer Dicke beispielsweise im rechten Winkel zueinander, wobei hohe Querkräfte übertragen werden können. Damit ergibt sich ein stabiles Regalsystem, das in bevorzugter Ausgestaltung der Erfindung aufgrund des Fehlens von sichtbaren Halteelementen zudem einen ansprechenden optischen Gesamteindruck verm ittelt.

Die in dem erfindungsgemäßen Regalsystem realisierte Verbindungstechnik ermöglicht die Schaffung eines Baukastensystems aus Paneelen und Borden, das in beliebigen Breiten und Höhen sowie mit beliebiger Anzahl und Anordnung an Borden hergestellt werden kann.

Hinsichtlich der Materialwahl gibt es keinerlei Beschränkungen. Die Rückwand bzw. die Paneelwand und das oder die Borde können aus demselben oder aus unterschiedlichen Materialien bestehen. Denkbar ist beispielsweise, dass die Rückwand und/oder das wenigstens eine Bord aus Massivholz, aus Holzwerkstoffen, insbesondere aus Spanplatten, MDF, Sperrholz oder Schichtholz, aus mit Furnier, Kunststoff oder Metall beschichteten Holzwerkstoffen, aus Verbundstoffen mit Waben-Mitteleinlagen aus Papier, Kunststoff oder Aluminium, aus Kunststoff, aus Glas, aus lackierten Trägerplatten und dergleichen besteht. Selbstverständlich sind auch Kombinationen der vorgenannten Materialien denkbar.

Auch die Wahl der Vergussmasse ist im wesentlichen beliebig, solange diese dazu geeignet ist, die vorgenannten Kräfte zwischen Bord und der Rück- bzw. Paneelwand zu übertragen. Die Vergussmasse kann beispielsweise aus Kunststoff und/oder Klebstoff bestehen oder Kunststoff und/oder Klebstoff aufweisen. Denkbar ist es, dass es sich bei der Vergussmasse um einen Zwei-Komponenten Klebstoff mit oder aus Polyurethan und/oder Epoxidharz (2K-Kleber) handelt. Als Vergussmasse eignen sich vorzugsweise alle hochfesten, aushärtbaren Kunststoffe mit optimalen Hafteigenschaften und guter, dauerhafter Formstabilität.

Die erfindungsgemäße Verbindung mittels Vergussmasse kann ohne Bewehrung ausgeführt sein, was bei geringer Belastung möglich ist. Bei hoher Belastung kann es sinnvoll sein, eine Bewehrung in die Vergussmasse einzufügen. Die Bewehrung kann je nach statischen Anforderungen beispielsweise aus Metal, wie Stahl oder Aluminium, aus Glas oder Kunststofffaser, Kohlefaser oder aus einer Kombination dieser Materialien bestehen oder diese Materialien bzw. eine Kombination dieser Materialien enthalten. Die Formgebung der Bewehrung richtet sich im wesentlichen nach statischen Erfordemissen. Die Bewehrung kann beispielsweise als Draht, Gitter, Vlies, Gewebe, Lochstreifen, Bolzen und dergleichen ausgeführt sein. Neben den genannten Materialien und Formgebungen sind selbstverständlich auch andere Varianten denkbar.

In weiterer Ausgestaltung der Erfindung ist vorgesehen, dass in der Vergussmasse hakenförmige Beschlagteile angeordnet sind, deren hakenförmiger Abschnitt aus der Vergussmasse herausragt und die zur Montage der Rückwand bzw. der Paneelwand an einer Wand oder Hängeschiene beispielsweise im Küchenbereich dienen. Auf diese Weise kann die Vergussmasse genutzt werden, um gleichzeitig eine Möglichkeit zur Montage des Regalsystems zur Verfügung zu stellen.

Grundsätzlich ist es weiterhin möglich, dass auf beiden Seiten der Rückwand bzw. der Paneelwand ein oder mehrere Borde angeordnet sind. Auf diese Weise lässt sich mittels des erfindungsgemäßen Regalsystems ein Raumteiler realisieren.

Die für die Rückwand und Borde verwendeten Materialien sind wie oben ausgeführt weitgehend beliebig, solange sie die Ausbildung der erforderlichen Ausnehmungen bzw. Nuten erlauben. In einer Ausgestaltung der vorliegenden Erfindung sind die Ausnehmungen als Ausfräsungen ausgeführt. Optimal sind Ausfräsungen, die eine Verteilung der Vergussmasse nach statischen Erfordernissen ermöglichen, d. h. die Spannungsverteilung bei Krafteinwirkung berücksichtigen.

Die Ausnehmungen bzw. Ausfräsungen können an geeigneter Stelle der Rückwand bzw. der Paneelwand und der Borde angeordnet sein. Denkbar ist beispielsweise, dass sich die Ausfräsung oder eine beliebige andere Ausnehmung in der hinteren, d.h. zur Rückwand bzw. Paneelwand gerichteten Kante des Bordes und/oder auf der Ober- oder Unterseite des Bordes befindet. Bezogen auf die Rückwand bzw. die Paneelwand kann sich die Ausnehmung zur Aufnahme der Vergussmasse in einem beliebigen Bereich, beispielsweise in einem zentralen Bereich oder auch im oberen oder unteren Endbereich befinden.

Die in der Rückwand vorgesehene Ausnehmung kann mit der Ausnehmung des Bordes im wesentlichen fluchten. Eine derartige Ausführungsform ist insbesondere dann sinnvoll, wenn das Bord nicht im Endbereich der Rückwand, sondern an anderer Stelle beispielsweise in einem mittleren Bereich angeordnet ist. Ferner kann vorgesehen sein, dass sich die in der Rückwand vorgesehene Ausnehmung im Winkel, vorzugsweise im rechten Winkel zu der Ausnehmung des Bordes erstreckt. Eine derartige Ausführungsform ist insbesondere für die Anordnung von Borden im unteren oder oberen Endbereich der Rückwand bzw. der Paneelwand sinnvoll.

Die wenigstens eine Ausnehmung kann sich über die gesamte Breite der Rück- bzw. Paneelwand oder über einen überwiegenden Teil der Rück- bzw. Paneelwand erstrecken. Die in dem Bord vorgesehene Ausnehmung kann sich über die gesamte Länge in einem überwiegenden Teil der Länge des Bordes erstrecken. Ferner ist es ebenfalls möglich, dass die wenigstens eine Ausnehmung der Rückwand und/oder des Bordes nicht durchläuft, sondern ein- oder mehrfach unterbrochen ist.

In weiterer Ausgestaltung der Erfindung kann vorgesehen sein, dass die Ausnehmung der Rück- bzw. Paneelwand auf der von den Borden abgewandten Seite, d. h. auf der Rückseite vorzugsweise abgesehen von einer oder mehreren Öffnungen zum Einfüllen der Vergussmasse bzw. zum Abzug überschüssiger Vergussmasse geschlossen ausgeführt ist. In dieser Ausführungsform stellt sich die Ausnehmung der Rück- bzw. Paneelwand als rückseitig geschlossener Kanal dar, der auf dieser Seite vorzugsweise eine oder mehrere Öffnungen zur Zu-/Abfuhr der Vergußmasse aufweist.

Weitere Einzelheiten und Vorteile der Erfindung ergeben sich aus einem in der Zeichnung dargestellten Ausführungsbeispiel. Es zeigen:
- Fig.1:: eine schematische Seitenansicht des erfindungsgemäßen Regalsystems,
- Fig. 2:: eine Schnittdarstellung des Regalsystems gemäß Fig. 1
- Fig. 3:: Ansichten der Paneelwand von hinten (oben) und von vorne (unten)
- Fig. 4:: eine perspektivische Darstellung eines Bordes von schräg hinten mit Detailansicht,
- Fig. 5:: eine perspektivische Ansicht eines Bordes in einer weiteren Ausführungsform von schräg hinten mit Detailansicht,
- Fig. 6:: Detaildarstellungen der Verbindung zwischen Bord und Paneelwand in einem mittleren Bereich der Paneelwand (oben) und dem unteren Endbereich der Paneelwand (unten),
- Fig. 7:: eine Anordnung gemäß Fig. 6 mit Bewehrungselementen,
- Fig. 8:: eine weitere Ansicht der Anordnung gemäß Fig. 6 mit weiteren Bewehrungselementen,
- Fig. 9:: perspektivische Ansichten von schräg vorne und von schräg hinten auf das erfindungsgemäße Regalsystem mit einem Bord in Paneelmitte und einem Bord im unteren Endbereich des Paneels,
- Fig. 10:: unterschiedliche Darstellungen der Paneelwand,
- Fig. 10a:: Schnittdarstellungen durch die Paneelwand gemäß Linie A-A und Linie F-F in Fig. 10,
- Fig. 10b:: eine perspektivische Darstellung der Paneelwand (Rückseite),
- Fig. 10c:: eine perspektivische Darstellung der Paneelwand (Vorderseite),
- Fig. 10d:: Darstellung von Detail B in Fig. 10a,
- Fig. 10e:: Darstellung von Detail C in Fig. 10a,
- Fig. 10f:: Darstellung von Detail E in Fig. 10,
- Fig. 11:: unterschiedliche Ansichten eines Bordes,
- Fig. 11a:: Schnittansicht des Bordes gemäß Linie A-A in Fig. 11,
- Fig. 11b:: Darstellung von Detail B in Fig. 11a,
- Fig. 12:: unterschiedliche Darstellungen einer weiteren Ausführungsform des Bordes,
- Fig. 12a:: Schnittansicht des Bordes gemäß Linie A-A in Fig. 12,
- Fig. 12b:: Darstellung von Detail B in Fig. 12a und
- Fig. 13:: unterschiedliche Ansichten des erfindungsgemäßen Regalsystems in einer weiteren Ausführungsform.

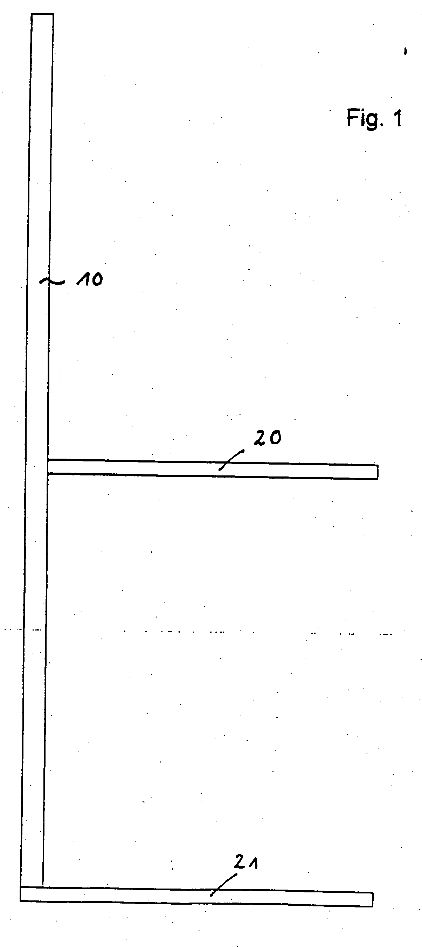

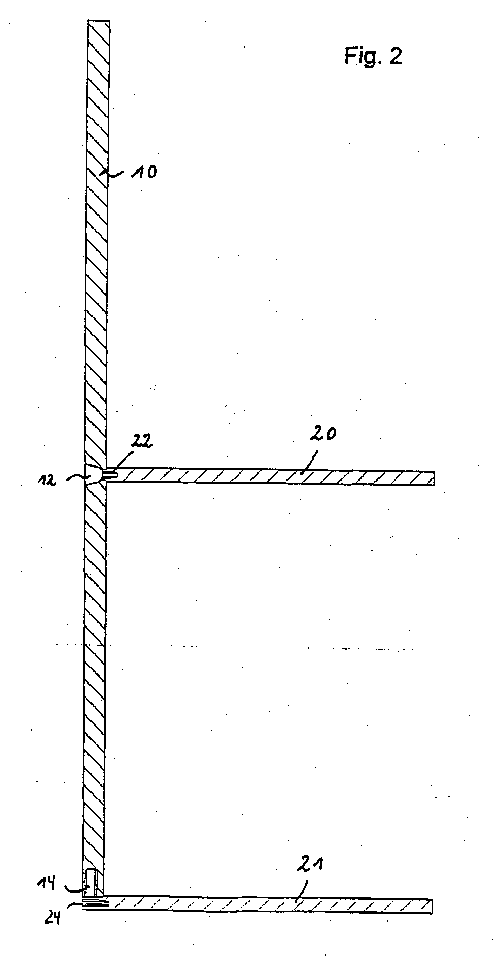

Aus Fig. 1 ist die Paneelwand 10 ersichtlich, die beispielsweise in einer Nische oberhalb der Arbeitsplatte einer Küche angeordnet sein kann. Selbstverständlich kann das erfindungsgemäße Regalsystem auch in beliebigen anderen Räumen Verwendung finden. In etwa im mittleren Bereich der Paneelwand 10 erstreckt sich das Bord 20. Im unteren Bereich der Paneelwand 10 ist das Bord 21 angeordnet. Eine Schnittansicht dieser Anordnung ergibt sich aus Fig. 2. Hieraus ist ersichtlich, dass das Bord 20 in seinem zur Paneelwand 10 gerichteten Endbereich in eine Nut auf der Vorderseite der Paneelwand 10 eingesteckt ist. Demgegenüber ist das Bord 21 stumpf an die Paneelwand 10 angesetzt, wie dies aus Fig. 2 hervorgeht. Die Paneelwand 10 steht auf dem unteren Bord 21 auf. Aus Fig. 2 ergibt sich ferner, dass die Paneelwand 10 Ausnehmungen 12, 14 aufweist. Des Weiteren weisen die Borde 20, 21 ebenfalls jeweils eine Ausnehmung 22, 24 auf, die jeweils an die Ausnehmungen 12, 14 der Paneelwand 10 angrenzen, wie dies aus Fig. 2 ersichtlich ist.

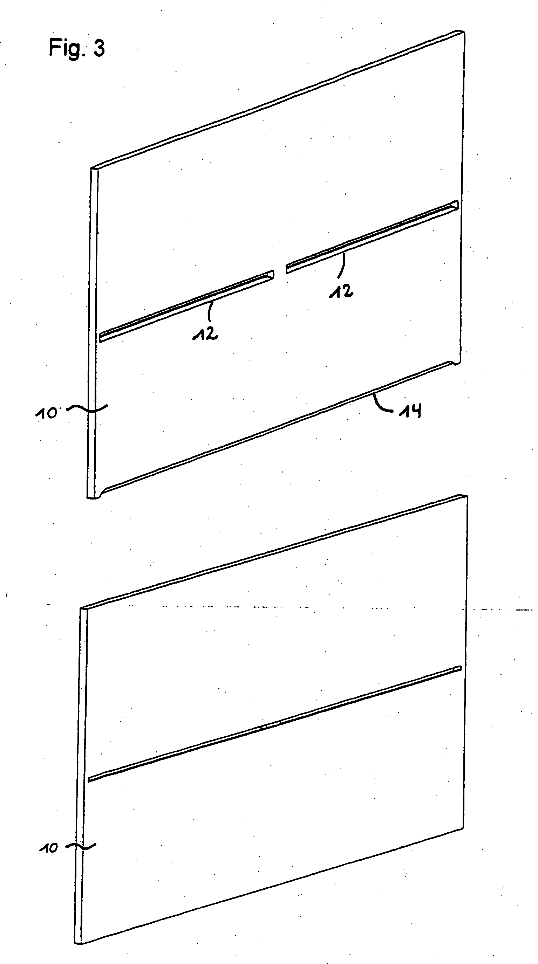

Fig. 3, unten zeigt in einer perspektivischen Darstellung die Paneelwand 10 in einer Vorderansicht. Hieraus ist ersichtlich, dass sich über nahezu die gesamte Breite der Paneelwand 10 eine Nut erstreckt, in die ein entsprechender Ansatz 28 auf der rückseitigen Kante des Bordes 20 einfügbar ist. Zwischen den Enden der Nut und der jeweils benachbarten Außenkante der Paneelwand 10 verbleibt ein schmaler nutfreier Bereich. Fig. 3, oben zeigt dieselbe Paneelwand 10 von der Rückseite. Hieraus ist ersichtlich, dass sich auf der Rückseite der Paneelwand 10 Ausnehmungen 12, 14 befinden, wobei die in etwa in der Mitte der Paneelwand 10 befindliche Ausnehmung 12 nicht durchgehend ausgeführt ist, sondern einen in etwa in Paneelwandmitte befindlichen Steg aufweist. Wie auch die Nut der Vorderseite der Paneelwand erstrecken sich die Ausnehmungen 12, 14 nicht ganz bis zur Außenseite der Paneelwand 10. Die Nut auf der Vorderseite der Paneelwand 10 steht mit den Ausnehmungen 12 in Verbindung.

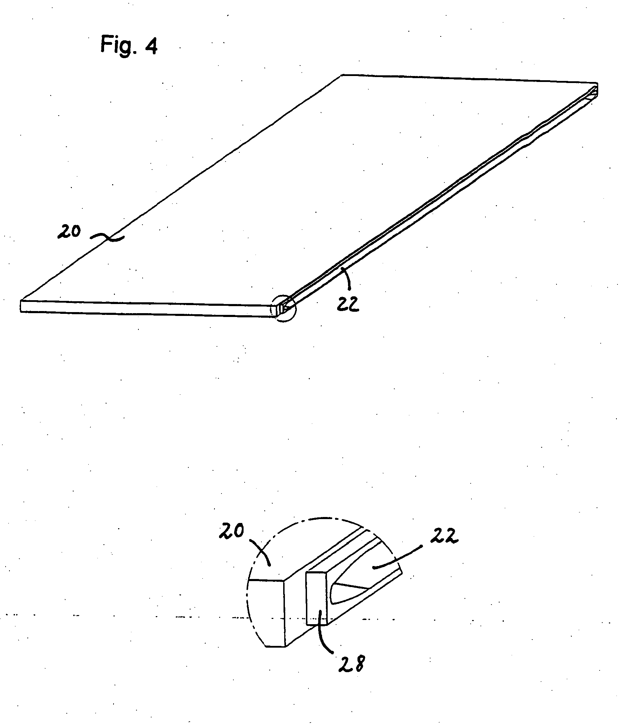

Fig. 4 zeigt eine perspektivische Darstellung des Bordes 20 von schräg hinten. Aus der Detailansicht gemäß Fig. 4 geht hervor, dass das Bord 20 auf seiner Rückseite einen Ansatz 28 aufweist, der von der hinteren Kante des Bordes 20 vorspringt und dessen Höhe in etwa der Breite der Nut entspricht, die sich auf der Vorderseite der Paneelwand 10 erstreckt. Wie aus Fig. 4 weiter ersichtlich befindet sich auf der Rückseite des Bordes 20 ferner die Ausnehmung 22 die wie die benachbarte Ausnehmung 12 der Paneelwand 10 (vgl. Fig. 2) zur Befüllung mit einer Vergussmasse dient.

Das Bord gemäß Fig. 4 eignet sich vorzugsweise zur Anordnung in einem Bereich der Paneelwand 10, der nicht in dem Endbereich angeordnet ist. Grundsätzlich kann das Bord 20 gemäß Fig. 4 jedoch auch in einem unteren oder oberen Endabschnitt der Paneelwand 10 angeordnet sein, wobei hierbei vorzugsweise vorgesehen ist, dass das Bord 20 vor die Paneelwand 10 gesetzt wird. In diesem Fall hat die Paneelwand 10 eine Ausnehmung aufzuweisen, die mit der in Fig. 4 dargestellten Ausnehmung 22 des Bordes in Verbindung steht, um die Vergussmasse entsprechend einbringen zu können.

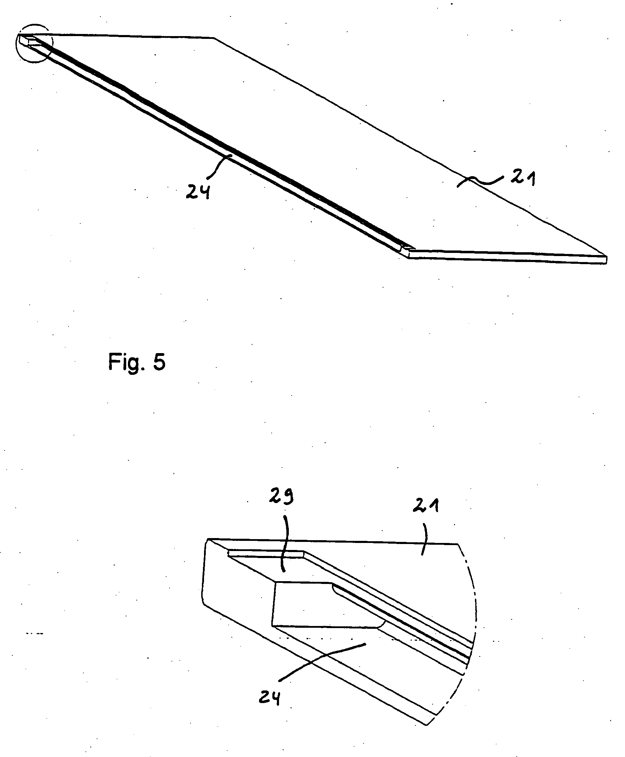

Fig. 5 zeigt in einer perspektivischen Darstellung von schräg hinten das Bord 21. Im Unterschied zu dem Bord 20 gemäß Fig. 4 weist das Bord 21 eine Ausnehmung 24 auf, die nicht nur von der hinteren Kante des Bordes, sondern auch von oben zugänglich ist. Dies ergibt sich beispielsweise aus der Detaildarstellung in Fig. 5. Das Bord 21 gemäß Fig. 5 nimmt in einem gegenüber der Bord-Oberseite zurückversetzten Bereich 29 den unteren Endabschnitt der Paneelwand 10 auf (vgl. Fig. 1, 2). Der zurückversetzte Bereich 29 wird durch einen durch eine Stufe abgegrenzten Bereich auf der Oberseite des Bordes 21 definiert, der sich aus der Detaildarstellung gemäß Fig. 5 ergibt.

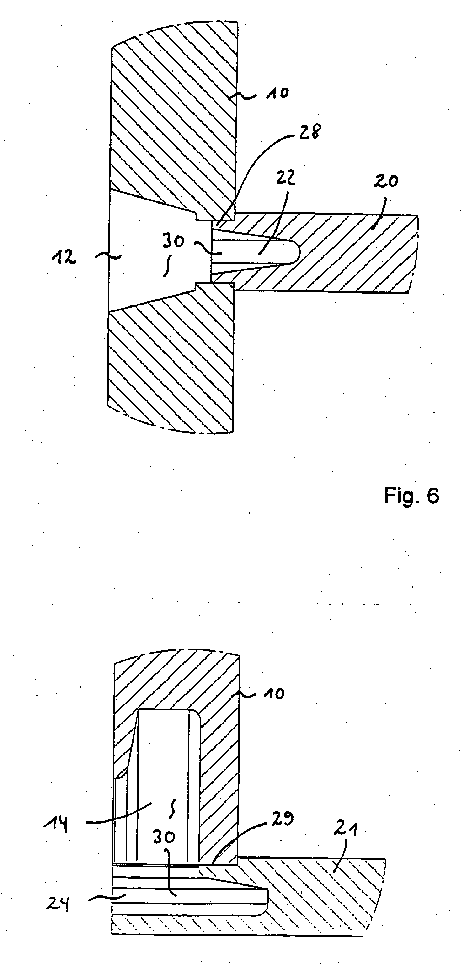

Aus Fig. 6 wird die Verbindung zwischen den Borden 20, 21 und der Paneelwand 10 deutlich. Fig. 6, oben zeigt die Verbindung des Bordes 20 mit der Paneelwand 10 beispielsweise in einem mittleren Abschnitt der Paneelwand 10. Der hintere Ansatz 28 des Bordes 20 wird in die Nut entsprechender Höhe auf der Vorderseite der Paneelwand 10 eingesteckt, wie dies aus Fig. 6, oben ersichtlich ist. In dieser Position stehen die Ausnehmung 22 des Bordes 20 sowie die Ausnehmung 12 der Paneelwand 10 miteinander in Verbindung bzw. fluchten miteinander.

Fig. 6, unten zeigt den unteren Endbereich der auf dem Bord 21 aufstehenden Paneelwand 10. Wie dies aus Fig. 6, unten hervorgeht steht die Paneelwand 10 in dem durch eine Stufe abgegrenzten Bereich 29 auf der Oberseite des Bordes 21 auf. Im unteren Abschnitt der Paneelwand 10 ist eine Ausnehmung 14 vorgesehen, die in Verbindung mit der Ausnehmung 24 des Bordes 21 steht. Die Ausnehmung 14 verläuft im wesentlichen parallel zu der durch die Paneelwand 10 gebildeten Ebene. Die Ausnehmung 24 des Bordes 21 ist von hinten sowie von oben zugänglich und steht in Verbindung mit der nach unten und hinten offenen Ausnehmung 14 der Paneelwand 10.

Die Ausnehmungen 12, 14 der Paneelwand 10 sowie die jeweils angrenzenden, mit diesen in Verbindung stehenden Ausnehmungen 22, 24 der Borde 20, 21 sind mit der ausgehärteten Vergußmasse 30 gefüllt. Im ausgehärteten Zustand verbindet diese in stabiler und belastbarer Weise die Borde 20, 21 mit der Paneelwand 10.

Zur Erhöhung der Stabilität der Verbindung kann vorgesehen sein, dass eine Bewehrung 40, wie beispielsweise Drähte, Lochplatten, Bügel und dergleichen in die Vergussmasse eingebettet wird.

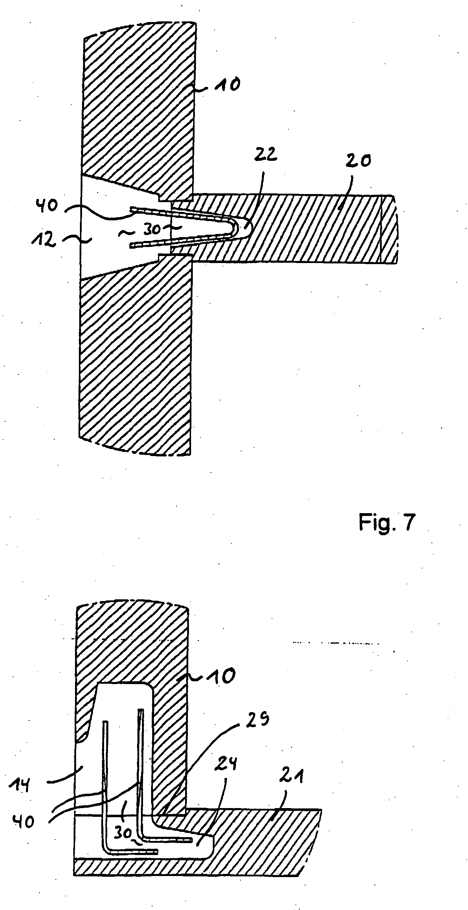

Fig. 7, oben zeigt eine Ausführung, bei der ein Drahtbügel oder Lochstreifen derart in die Vergussmasse 30 eingearbeitet ist, dass sich dieser sowohl in der Ausnehmung 12 der Paneelwand 10 als auch in der Ausnehmung 22 des Bordes 20 erstreckt. Die Bewehrung 40 kann sich über die gesamte Länge der Ausnehmungen oder auch nur über Teilbereiche erstrecken.

Fig. 7, unten zeigt zwei winkelförmige Bewehrungen 40, die sich ebenfalls sowohl in der Ausnehmung 14 der Paneelwand 10 als auch in der Ausnehmung 24 des Bordes 21 erstrecken. Auch für diese Bewehrung 40 gilt, dass diese sich über die gesamte Länge der Ausnehmungen 14, 24 oder auch nur über einen Teilbereich erstrecken können.

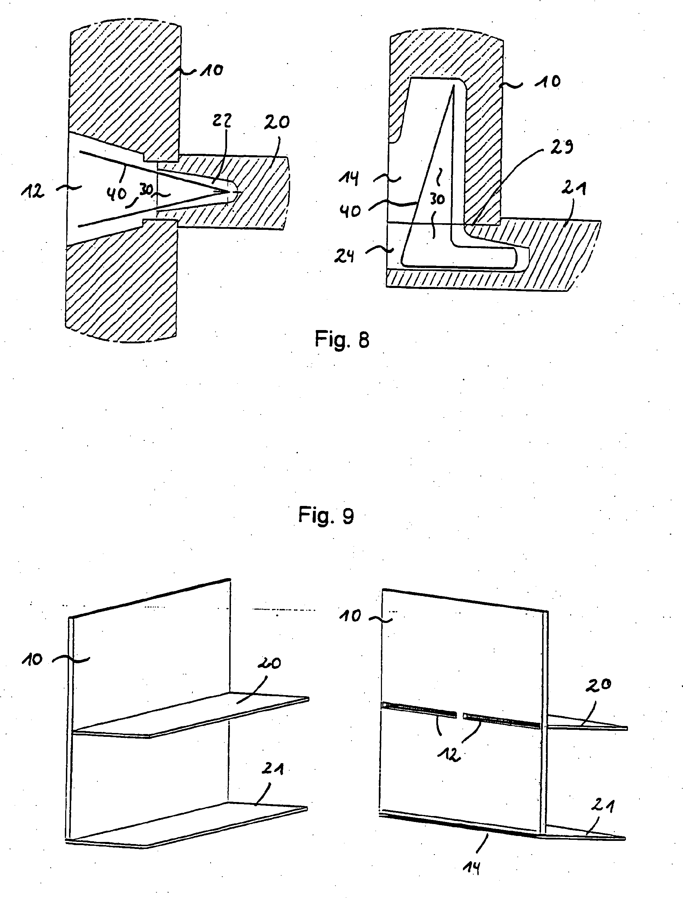

Fig. 8, linke Darstellung zeigt eine im Querschnitt spitzwinkelige Bewehrung 40, Fig. 8, rechte Darstellung zeigt als Bewehrung 40 eine geschlossene Konstruktion, die sich in ihrer Kontur zumindest abschnittsweise an die Kontur der Ausnehmungen anpasst. Bei den dargestellten Konstruktionen kann es sich beispielsweise um Lochbleche oder Drahtkonstruktionen handeln.

Aus. Fig. 9, linke Abbildung lässt sich eine perspektivische Darstellung des erfindungsgemäßen Regalsystems in einer Ansicht von schräg vorne entnehmen. Fig. 9, rechte Darstellung zeigt die gleiche Anordnung von schräg hinten. Hieraus wird nochmals ersichtlich, dass die Ausnehmung 12 in der Mitte unterbrochen ist, während die unten angeordnete Ausnehmung 14 durchgehend ausgeführt ist.

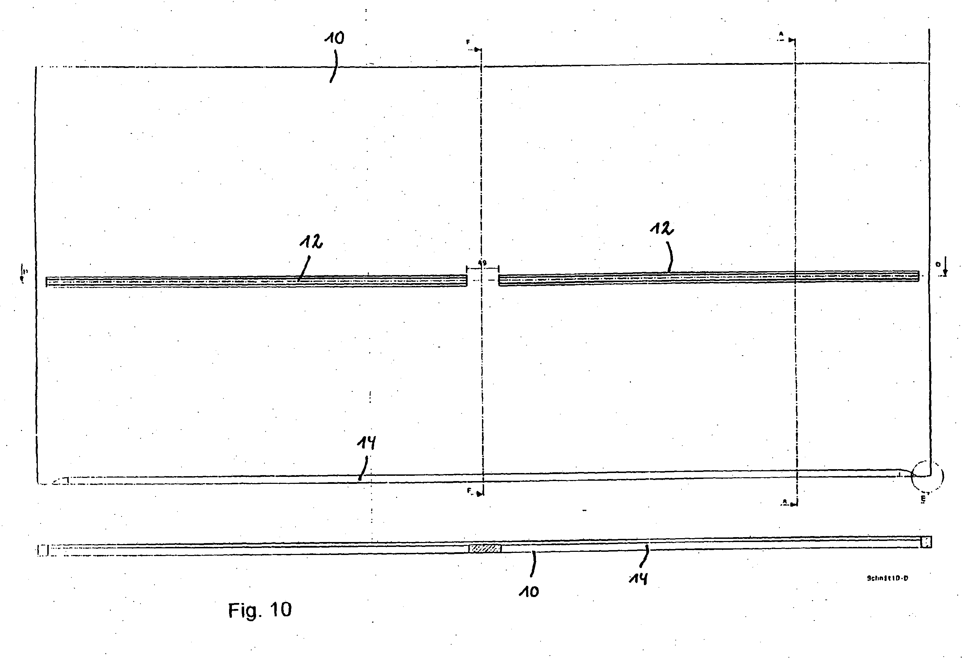

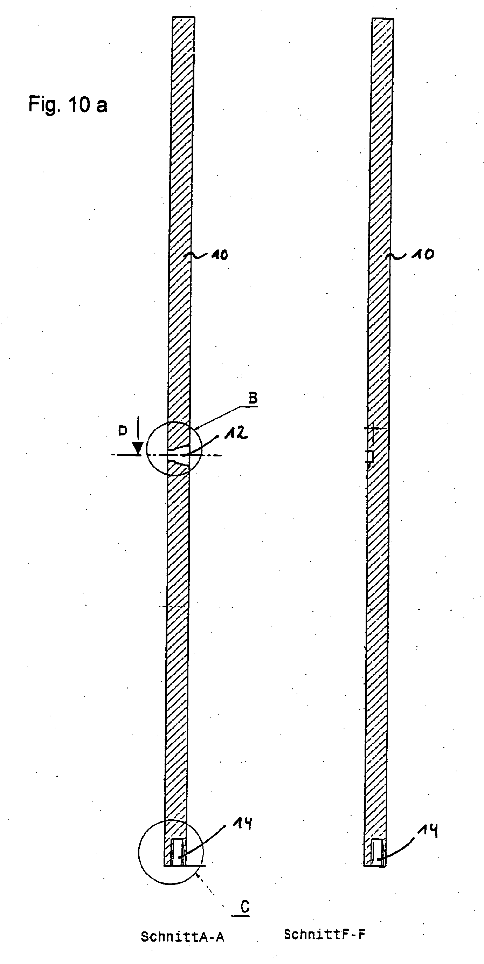

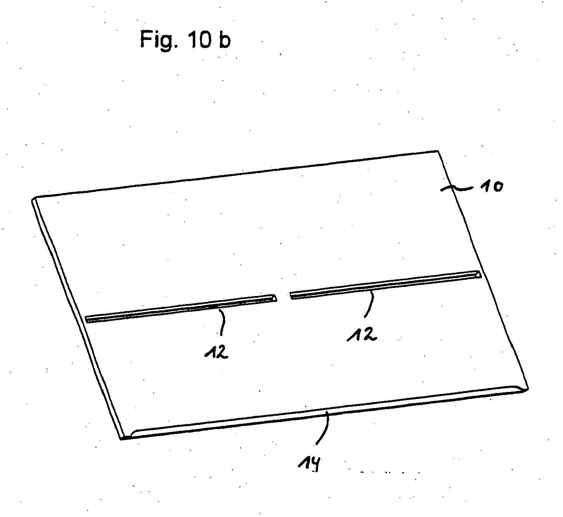

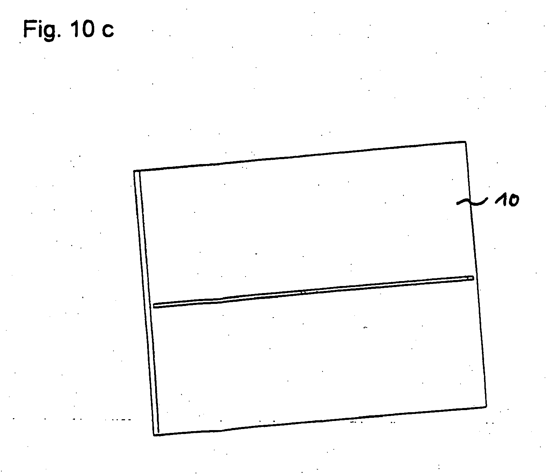

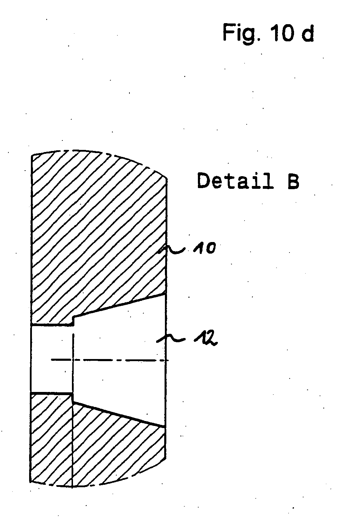

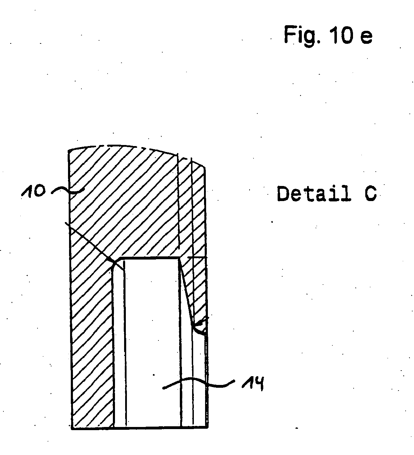

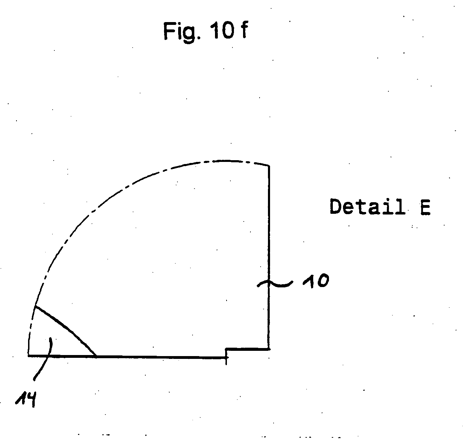

Dies ergibt sich ebenfalls aus Fig. 10, die die Rückseite der Paneelwand 10 sowie eine Schnittdarstellung gemäß Linie D-D zeigt. Aus Fig. 10 geht weiter hervor, dass sich im unteren Endbereich die Ausnehmung 14 befindet, die sich nicht über die gesamte Breite der Paneelwand 10 erstreckt, sondern in den Randbereichen durch nutfreie Abschnitte der Paneelwand 10 begrenzt wird. Entsprechendes gilt für die Ausnehmung 12, die sich in etwa in einem mittleren Bereich der Paneelwand 10 erstreckt. Selbstverständlich sind auch davon abweichende Anordnungen möglich.

Fig. 10a zeigt die Schnittansichten gemäß Linie A-A und F-F in Fig. 10. Fig. 10a, linke Darstellung gemäß Schnitt A-A verdeutlicht, dass die auf der Rückseite der Paneelwand 10 befindliche Ausnehmung 12 zur Aufnahme der Vergussmasse im wesentlichen konisch zuläuft, während die sich auf der Vorderseite befindliche Nut mit parallelen Wandungen ausgeführt ist. Die Längsachse der Ausnehmung 12 sowie der Nut stehen senkrecht zur Paneelwandoberfläche. Auch demgegenüber geneigte Ausführungen sind denkbar.

Fig. 10a, rechte Darstellung gemäß Schnitt F-F zeigt, dass die auf der Vorderseite befindliche Nut zur Aufnahme des Ansatzes 28 des Bordes 20 durchläuft, während dies für die Ausnehmung 12 nicht gilt. Fig. 10b zeigt nochmals in einer perspektivischen Darstellung die Paneelwand 10 von schräg hinten. Eine Vorderansicht der Paneelwand 10 ergibt sich aus Fig. 10c.

Fig. 10d zeigt die Detaildarstellung des Details B gemäß Fig. 10a. Rechts dargestellt ist die Rückseite der Paneelwand 10, die linke Seite zeigt die Vorderseite der Paneelwand 10. Neben der dargestellten konischen Ausführung der Ausnehmung 12 sind selbstverständlich auch abweichende Ausführungsformen denkbar, beispielsweise gekrümmte Wandungen oder auch parallel zueinander verlaufende Wandungen. Die Ausnehmung 12 steht mit der auf der Vorderseite befindlichen Nut in Verbindung. Die konische Ausnehmung 12 ist mittels einer Stufe zur Nut abgesetzt. Ebenfalls ist denkbar, dass die konische Ausnehmung 12 stufenlos in die Nut übergeht.

Fig. 10e zeigt Detail C gemäß Fig. 10a. Auch in dieser Darstellung ist die rechts dargestellte Seite die Rückwand der Paneelwand 10 während die links dargestellte Seite die Vorderwand darstellt. Mit dem aus Detail C ersichtlichen unteren Abschnitt der Paneelwand 10 wird diese auf das Bord 21 aufgesetzt, das eine Ausnehmung 24 aufweist, die an die dargestellte Ausnehmung 14 der Paneelwand 10 angrenzt, so dass beide Ausnehmungen gemeinsam mit einer Vergussmasse befüllt werden können.

Die Ausnehmung 14 gemäß Detail C ist nach hinten sowie nach unten offen, wie dies aus Fig. 10e hervorgeht.

Fig. 10f zeigt schließlich Detail E gemäß Fig. 10 und zeigt den unteren Endbereich der Paneelwand 10. Aus dieser Detaildarstellung ist ersichtlich, dass die Paneelwand 10 auf ihrer Unterseite einen stufenförmigen Ansatz aufweist, der in eine entsprechende Ausnehmung 29 auf der Oberseite des Bordes 21 aufgestellt wird.

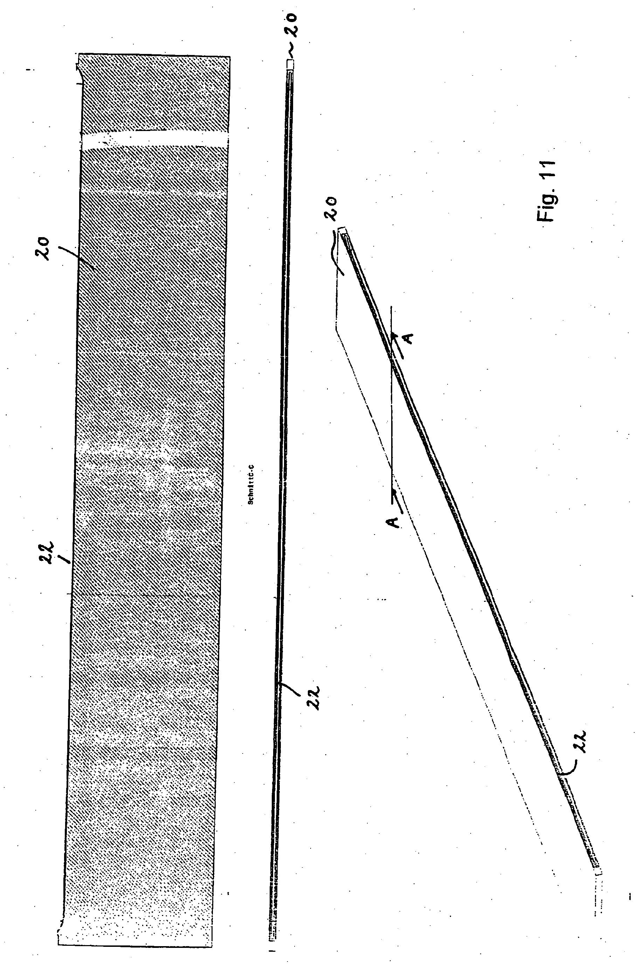

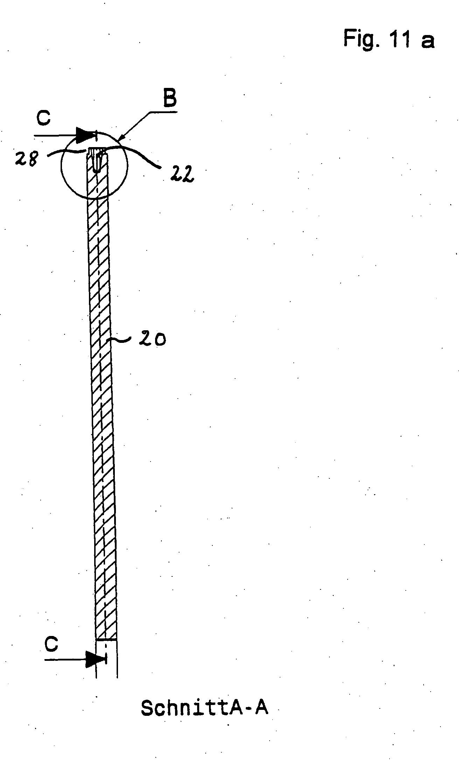

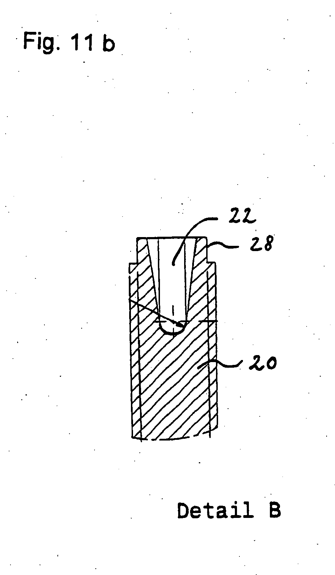

Fig. 11, oben zeigt das Bord 20 in einer Schnittdarstellung gemäß Linie C-C nach Fig. 11a. Die mittlere Darstellung gemäß Fig. 11 zeigt die Ansicht des Bordes 20 von hinten und Fig. 11, unten eine perspektivische Ansicht von schräg hinten. Aus Fig. 11 geht hervor, dass sich die auf der Rückseite des Bords 20 befindliche Ausnehmung 22 nicht über die gesamte Länge des Bords 20 erstreckt, d.h. schmale Endbereiche des Bords 20 sind ohne Ausnehmung ausgeführt.

Aus Fig. 11a geht hervor, dass das Bord 20 in seinem hinteren Endbereich, der gemäß Fig. 11a oben dargestellt ist, einen Ansatz 28 aufweist, der eine geringere Dicke als das Bord selbst hat. In diesem Ansatz und in dem angrenzenden Bereich des Bordes erstreckt sich die Ausnehmung 22. Die Mittelebene des Bordes 20 läuft mittig durch die Ausnehmung 22 und teilt diese in zwei symmetrische Hälften. Auch eine asymmetrische Ausführung der Ausnehmung 22 ist denkbar.

Fig. 11b zeigt die Ausnehmung 22 in vergrößerter Darstellung. Aus dieser geht hervor, dass die Ausnehmung konisch zuläuft und einen im wesentlichen U-förmigen Bodenabschnitt aufweist. Aus dieser Darstellung geht ferner nochmals hervor, dass der Ansatz 28 im Endbereich des Bordes 20 eine geringere Dicke aufweist als der restliche Teil des Bordes. Die Ausnehmung 22 erstreckt sich nicht nur in dem Ansatz 28, sondern auch in dem angrenzenden Abschnitt des Bordes 20.

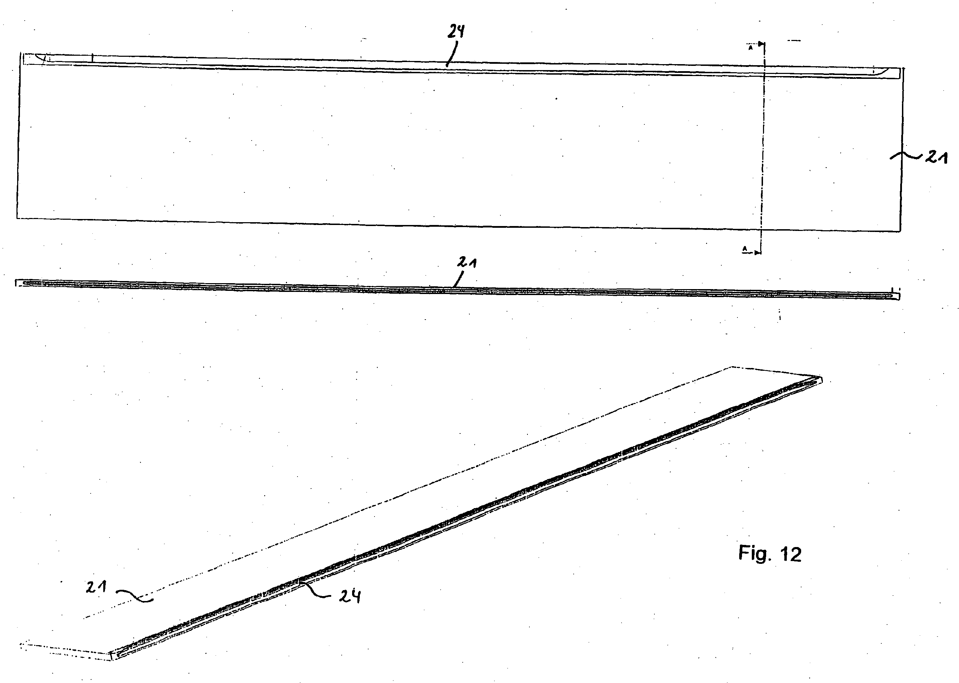

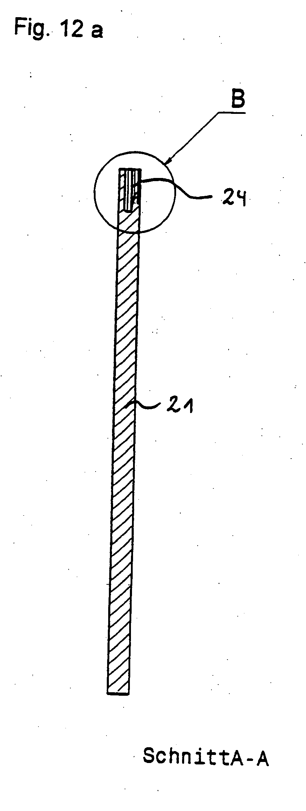

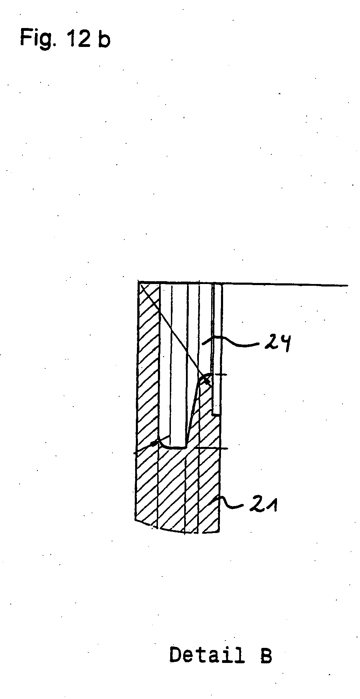

Fig. 12, oben zeigt eine Draufsicht auf ein Bord 21, auf das die Paneelwand 10 aufgestellt wird. Ein an die Paneelwand oben angrenzendes Bord hat eine entsprechende Ausführung. Aus Fig. 12, mittlere Darstellung, ergibt sich eine Draufsicht auf die rückwärtige Kante des Bordes und Fig. 12, unten zeigt eine perspektivische Ansicht auf das Bord 21 von schräg hinten. Aus Fig. 12a ergibt sich eine Schnittansicht gemäß Linie A-A in Fig. 12 und Fig. 12b zeigt Detail B gemäß Fig. 12a. Aus Fig. 12b geht hervor, dass das Bord 21 eine Ausnehmung 24 aufweist, die nach zwei Seiten des Bordes offen ist. In dem vorliegenden Ausführungsbeispiel handelt es sich um die in Fig. 12b oben angeordnete Hinterseite sowie um Oberseite des Bordes, die in Fig. 12b als rechte Seite dargestellt ist. Auch der umgekehrte Fall ist selbstverständlich denkbar, dass das Bord gemäß Fig. 12 oben auf die Paneelwand aufgesetzt wird. In diesem Fall erstreckt sich die Ausnehmung des Bordes 21 auf der Unterseite sowie auf der Hinterseite. Die Vergußmasse wird in die Ausnehmung 24 sowie in die angrenzende Ausnehmung 14 der Paneelwand 10 eingefüllt und leitet im ausgehärteten Zustand Kräfte vom Bord in die Paneelwand ein.

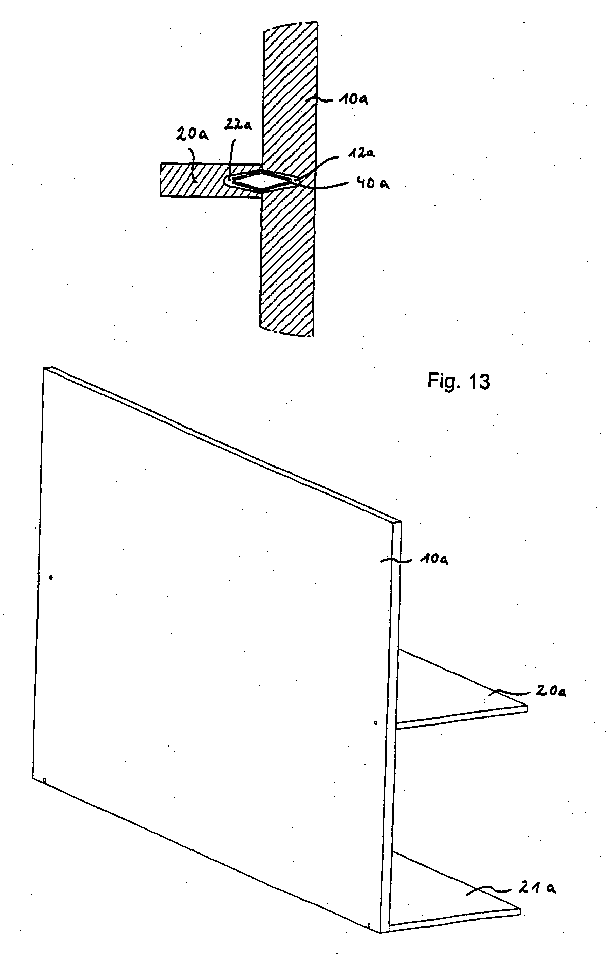

Fig. 13 zeigt das erfindungsgemäße Regalsystem in einer weiteren Ausführungsform.

Fig. 13, unten zeigt das Regalsystem in einer perspektivischen Ansicht von schräg hinten. Hieraus wird ersichtlich, dass die Ausnehmung der Paneelwand 10a auf der von dem Bord 20a, 21 a abgewandten Seite abgesehen von zwei Öffnungen pro Bord geschlossen ausgeführt sein kann, wie sich dies auch aus der Schnittdarstellung gemäß Fig. 13, oben ergibt, die ein Detail des Verbindungsbereiches Paneelwand/Bord zeigt.

Wie aus Fig. 13, oben ersichtlich, ist die Ausnehmung 12a der Paneelwand 10a aus ihrer von dem Bord 20a abgewandten Seite geschlossen ausgeführt. Die Paneelwand 10a weist in dieser Ausführungsform der Erfindung eine oder mehr, vorzugsweise zwei Öffnungen pro Ausnehmung bzw. pro Bord auf, durch die die Vergussmasse in die Ausnehmung 12a eingeführt bzw. überschüssige Vergussmasse abgezogen wird.

Wie aus Fig. 13, unten ersichtlich, sind beide Borde 20a, 21 a von vorne an die Paneelwand 10a angesetzt und in dieser Position vergossen.

Fig. 13, oben zeigt weiterhin hin die im Querschnitt rautenförmige Bewehrung 40a, die sich sowohl in den Ausnehmungen der Borde 20a, 21 a sowie auch in den Ausnehmungen der Paneelwand 10a erstreckt.

Wie aus Fig. 13, oben weiter ersichtlich, wird das Bord 20a nicht in eine auf der Vorderseite der Paneelwand 10a vorgesehene Nut eingesteckt, sondern lediglich auf die Front der Paneelwand 10a aufgesetzt. Entsprechendes gilt für das unten angeordnete Bord 21 a. Selbstverständlich ist es ebenso möglich, die Borde mit Ansatz und die Paneelwand mit einer Nut zu Aufnahme dieses Ansatzes auszuführen.

Das erfindungsgemäße Regalsystem ermöglicht das Verbinden zweier Platten geringer Dicke beispielsweise im rechten Winkel zueinander, wobei hohe Querkräfte übertragen werden können. In bevorzugter Ausgestaltung der Erfindung wird hierzu an entsprechend ausgeformten Einfräsungen an den Kanten bzw. Flächen der Platten ein 2K-Gussmaterial eingebracht, das die Kräfte weit im Inneren der Platte aufnimmt und gleichmäßig an die zweite Platte überträgt. Um eine Absenkung zu minimieren oder zu verhindern, wird in weiterer Ausgestaltung der Erfindung eine metallische Bewehrung in die Zug- und Druckzone der Ausfräsungen eingebracht und mit umgossen.

Ein Vorteil der Erfindung ist der große tragende Materialquerschnitt an der Verbindungsfläche der beiden Platten und die damit erreichbare hohe Kraftübertragung.

Durch die zueinander winkelförmige Ausgestaltung der Fräsungen in den Platten sind auch stumpfe Stöße im Außenbereich der Platten möglich.

Die Ausnehmungen sind beliebig lang ausgeführt, können jedoch zur Stabilisierung der Bauteile mit einem oder mehreren Stegen unterbrochen sein.

## Patentansprüche

1. Regalsystem mit einer Rückwand, insbesondere einer Paneelwand (10), und mit wenigstens einem an der Rückwand angeordneten Bord (20, 21), wobei das Bord (20, 21) in die Rückwand eingesteckt oder an die Rückwand angesetzt ist, wobei das Bord (20, 21) sowie die Rückwand jeweils wenigstens eine sich über die Breite erstreckende Ausnehmung (12, 14, 22, 24) aufweisen, die zueinander benachbart sind, **dadurch gekennzeichnet, dass** sich in der Ausnehmung (12, 14) der Rückwand sowie in der benachbarten Ausnehmung (22, 24) des Bordes (20, 21) eine Vergussmasse befindet, wobei die Ausnehmung (12, 14) der Rückwand auf der von dem Bord abgewandten Seite zur Befüllung mit Vergussmasse offen ist.

2. Regalsystem nach Anspruch 1, **dadurch gekennzeichnet, dass** das Bord (20) in die Rückwand eingesteckt ist.

3. Regalsystem nach Anspruch 1 oder 2, **dadurch gekennzeichnet, dass** die Rückwand und das oder die Borde (20, 21) aus demselben oder aus unterschiedlichen Materialien bestehen.

4. Regalsystem nach einem der Ansprüche 1 bis 3, **dadurch gekennzeichnet, dass** die Rückwand und/oder das wenigstens eine Bord (20, 21) aus Massivholz, aus Holzwerkstoffen, insbesondere aus Spanplatten, MDF, Sperrholz oder Schichtholz, aus mit Furnier, Kunststoff oder Metall beschichteten Holzwerkstoffen, aus Verbundwerkstoffen mit Waben-Mittellagen aus Papier, Kunststoff oder Aluminium, aus Kunststoff, aus Glas oder aus lackierten Trägerplatten oder aus einer Kombination der vorgenannten Materialien besteht.

5. Regalsystem nach einem der vorhergehenden Ansprüche, **dadurch gekennzeichnet, dass** die Vergußmasse (30) aus Kunststoff und/oder Klebstoff besteht oder Kunststoff und/oder Klebstoff aufweist.

6. Regalsystem nach Anspruch 5, **dadurch gekennzeichnet, dass** es sich bei der Vergußmasse (30) um einen 2-Komponenten Klebstoff mit oder aus Polyurethan und/oder Epoxidharz handelt.

7. Regalsystem nach einem der vorhergehenden Ansprüche, **dadurch gekennzeichnet, dass** in der Vergußmasse (30) eine Bewehrung (40) enthalten ist.

8. Regelsystem nach Anspruch 7, **dadurch gekennzeichnet, dass** die Bewehrung (40) Stahl, Aluminium, Glas- oder Kunststofffaser oder Kohlefaser oder eine Kombination dieser Materialien enthält oder aus einem dieser Materialien oder einer Kombination dieser Materialien besteht.

9. Regalsystem nach Anspruch 7 oder 8, **dadurch gekennzeichnet, dass** die Bewehrung (40) als Draht, Gitter, Vlies, Gewebe, Lochstreifen oder Bolzen ausgeführt ist.

10. Regalsystem nach einem der vorhergehenden Ansprüche, **dadurch gekennzeichnet, dass** in der Vergußmasse (30) hakenförmige Beschlagteile angeordnet sind, deren hakenförmiger Abschnitt aus der Vergußmasse (30) herausragt und die zur Montage der Rückwand an einer Wand oder Hängeschiene dienen.

11. Regalsystem nach einem der vorhergehenden Ansprüche, **dadurch gekennzeichnet, dass** auf beiden Seiten der Rückwand ein oder mehrere Borde angeordnet sind.

12. Regalsystem nach einem der vorhergehenden Ansprüche, **dadurch gekennzeichnet, dass** die Ausnehmungen (12, 14, 22, 24) als Ausfräsungen ausgeführt sind.

13. Regalsystem nach einem der vorhergehenden Ansprüche, **dadurch gekennzeichnet, dass** die in der Rückwand vorgesehene Ausnehmung (12) mit der Ausnehmung (22) des Bordes (20) im wesentlichen fluchtet.

14. Regalsystem nach einem der vorhergehenden Ansprüche, **dadurch gekennzeichnet, dass** sich die in der Rückwand vorgesehene Ausnehmung (14) im Winkel, vorzugsweise im rechten Winkel, zu der Ausnehmung (24) des Bordes (21) erstreckt.

15. Regalsystem nach einem der vorhergehenden Ansprüche, **dadurch gekennzeichnet, dass** sich die wenigstens eine Ausnehmung (12, 14, 22, 24) über einen wesentlichen Teil der Breite der Rückwand bzw. über einen wesentlichen Teil der Länge des Bordes (20, 21) erstreckt.

16. Regalsystem nach einem der vorhergehenden Ansprüche, **dadurch gekennzeichnet, dass** die wenigstens eine Ausnehmung (12) der Rückwand und/oder des Bordes unterbrochen ist.

17. Regalsystem nach einem der vorhergehenden Ansprüche, **dadurch gekennzeichnet, dass** die wenigstens eine Ausnehmung (12a) der Rückwand auf der von dem Bord abgewandten Seite abgesehen von wenigstens einer Öffnung zur Befüllung der Ausnehmung (12a) mit Vergussmasse geschlossen ausgeführt ist.

## Claims

1. A shelf system with a back wall, in particular a panel wall (10), and with at least one shelf (20, 21) arranged on the back wall, wherein the shelf (20, 21) is inserted in the back wall or attached to the back wall, wherein the shelf (20, 21) and the back wall respectively have at least one recess (12, 14, 22, 24) extending over the width, which are mutually adjacent,
**characterized in that** in the recess (12, 14) of the back wall and in the adjacent recess (22, 24) of the shelf (20, 21) a casting compound is disposed, wherein the recess (12, 14) of the back wall is open on the side facing away from the shelf for filling with casting compound.

2. The shelf system according to claim 1, **characterized in that** the shelf (20) is inserted in the back wall.

3. The shelf system according to claim 1 or 2, **characterized in that** the back wall and the shelf or the shelves (20, 21) consist of the same or of different materials.

4. The shelf system according to any of the claims 1 to 3, **characterized in that** the back wall and/ or the at least one shelf (20, 21) consists of solid wood, of wood composites, in particular of flake boards, MDF, plywood or laminated wood, of wood composites coated with veneer, plastic or metal, of composite materials with honeycomb-shaped middle layers of paper, plastic or aluminum, of plastic, of glass or of lacquered carrier plates or of a combination of the aforementioned materials.

5. The shelf system according to any of the preceding claims, **characterized in that** the casting compound (30) consists of plastic and/ or an adhesive or has plastic and/ or an adhesive.

6. The shelf system according to claim 5, **characterized in that** the casting compound (30) is a 2-component adhesive with or of polyurethane and/ or epoxy resin.

7. The shelf system according to any of the preceding claims, **characterized in that** in the casting compound (30) a reinforcement (40) is contained.

8. The shelf system according to claim 7, **characterized in that** the reinforcement (40) contains steel, aluminum, glass fibers or plastic fibers or carbon fibers or a combination of these materials, or consists of one of these materials or a combination of these materials.

9. The shelf system according to claim 7 or 8, **characterized in that** the reinforcement (40) is configured as a wire, mesh, mat, fabric, punched strip or bolt.

10. The shelf system according to any of the preceding claims, **characterized in that** in the casting compound (30) there are arranged hook-shaped fittings, whose hook-shaped portion projects from the casting compound (30), and which serve for mounting the back wall on a wall or suspension rail.

11. The shelf system according to any of the preceding claims, **characterized in that** on both sides of the back wall there are arranged one or several shelves.

12. The shelf system according to any of the preceding claims, **characterized in that** the recesses (12, 14, 22, 24) are configured as milled-out recesses.

13. The shelf system according to any of the preceding claims, **characterized in that** the recess (12) provided in the back wall is substantially flush with the recess (22) of the shelf (20).

14. The shelf system according to any of the preceding claims, **characterized in that** the recess (14) provided in the back wall extends at an angle, preferably at a right angle, to the recess (24) of the shelf (21).

15. The shelf system according to any of the preceding claims, **characterized in that** the at least one recess (12, 14, 22, 24) extends over a substantial part of the width of the back wall or over a substantial part of the length of the shelf (20, 21).

16. The shelf system according to any of the preceding claims, **characterized in that** the at least one recess (12) of the back wall and/ or of the shelf is interrupted.

17. The shelf system according to any of the preceding claims, **characterized in that** the at least one recess (12a) of the back wall is configured to be closed on the side facing away from the shelf apart from at least one opening for filling the recess (12a) with casting compound.

## Revendications

1. Système de rayonnage comprenant une paroi arrière, notamment une paroi lambrissée (10), et comprenant au moins une étagère (20, 21) agencée à la paroi arrière, l'étagère (20, 21) étant enfichée dans la paroi arrière ou étant appliquée à la paroi arrière, l'étagère (20, 21) ainsi que la paroi arrière comportant respectivement au moins un évidement (12, 14, 22, 24) s'étendant sur la largeur qui sont avoisinants, **caractérisé en ce qu'**une masse de scellement se trouve dans l'évidement (12, 14) de la paroi arrière ainsi que dans l'évidement avoisinant (22, 24) de l'étagère (20, 21), l'évidement (12, 14) de la paroi arrière étant ouvert du côté opposé à l'étagère pour le remplissage avec de la masse de scellement.

2. Système de rayonnage selon la revendication 1, **caractérisé en ce que** l'étagère (20) est enfichée dans la paroi arrière.

3. Système de rayonnage selon la revendication 1 ou 2, **caractérisé en ce que** la paroi arrière et la ou les étagères (20, 21) consistent en le même ou en de différents matériaux.

4. Système de rayonnage selon une des revendications de 1 à 3, **caractérisé en ce que** la paroi arrière et/ou la au moins une étagère (20, 21) consiste en du bois massif, en matériaux à base de bois, notamment en des panneaux de particules, MDF, contreplaqué ou bois empilé, en matériaux à base de bois revêtus de placage, de matière plastique ou de métal, en matériaux composites à âmes alvéolaires en papier, matière plastique ou aluminium, en matière plastique, en verre ou en des plaques porteuses vernies ou en une combinaison des matériaux précités.

5. Système de rayonnage selon une des revendications précédentes, **caractérisé en ce que** la masse de scellement (30) consiste en de la matière plastique et/ou de la colle ou comporte de la matière plastique et/ou de la colle.

6. Système de rayonnage selon la revendication 5, **caractérisé en ce que** la masse de scellement (30) consiste en une colle à 2 composants contenant ou se composant de polyuréthane et/ou de résine époxyde.

7. Système de rayonnage selon une des revendications précédentes, **caractérisé en ce que** la masse de scellement (30) renferme une armature (40).

8. Système de rayonnage selon la revendication 7, **caractérisé en ce que** l'armature (40) contient de l'acier, de l'aluminium, des fibres de verre ou de matière plastique ou des fibres de carbone ou une combinaison de ces matériaux ou consiste en un de ces matériaux ou en une combinaison de ces matériaux.

9. Système de rayonnage selon la revendication 7 ou 8, **caractérisé en ce que** l'armature (40) est réalisée sous forme de fil, de grille, de nontissé, de tissu, de bande perforée ou de goujon.

10. Système de rayonnage selon une des revendications précédentes, **caractérisé en ce que**, dans la masse de scellement (30), des pièces de ferrure crochues sont agencées, dont la partie crochue dépasse de la masse de scellement (30) et qui servent à l'implantation de la paroi arrière sur un mur ou sur des rails de suspension.

11. Système de rayonnage selon une des revendications précédentes, **caractérisé en ce que**, des deux côtés de la paroi arrière, une ou plusieurs étagères sont agencées.

12. Système de rayonnage selon une des revendications précédentes, **caractérisé en ce que** les évidements (12, 14, 22, 24) sont réalisés sous forme de fraisures.

13. Système de rayonnage selon une des revendications précédentes, **caractérisé en ce que** l'évidement (12) prévu dans la paroi arrière est essentiellement aligné avec l'évidement (22) de l'étagère (20).

14. Système de rayonnage selon une des revendications précédentes, **caractérisé en ce que** l'évidement (14) prévu dans la paroi arrière s'étend en angle, de préférence en angle droit, par rapport à l'évidement (24) de l'étagère (21).

15. Système de rayonnage selon une des revendications précédentes, **caractérisé en ce que** le au moins un évidement (12, 14, 22, 24) s'étend sur une partie essentielle de la largeur de la paroi arrière ou sur une partie essentielle de la longueur de l'étagère (20, 21).

16. Système de rayonnage selon une des revendications précédentes, **caractérisé en ce que** le au moins un évidement (12) de la paroi arrière et/ou de l'étagère est discontinu.

17. Système de rayonnage selon une des revendications précédentes, **caractérisé en ce que** le au moins un évidement (12a) de la paroi arrière est réalisé, à part au moins une ouverture destinée au remplissage de l'évidement (12a) avec de la masse de scellement, sous forme fermée du côté opposé à l'étagère.
